# EUROPÄISCHE PATENTANMELDUNG

(11) **EP 4 160 328 A1**
(43) Veröffentlichungstag der Anmeldung: **05.04.2023**
(21) Anmeldenummer: 21199843.0
(22) Anmeldetag: 29.09.2021
(51) Int. Cl.: G05B 19/05

(54) **VERFAHREN UND ANORDNUNG ZUM AUTOMATISIERTEN AUSTAUSCH VON PROZESSDATEN ZWISCHEN INDUSTRIELLEN STEUERUNGEN**

(71) Anmelder: Siemens Aktiengesellschaft, 80333 München (DE)
(72) Erfinder: Reichmann, Jürgen, 81825 München (DE); Götz, Jan, 91054 Buckenhof (DE)
(74) Vertreter: Siemens Patent Attorneys

(57) **Zusammenfassung**

Die Erfindung betrifft ein Verfahren und eine Anordnung zum automatisierten Austausch von Prozessdaten zwischen zumindest zwei industriellen Steuerungen (n1, n2), wobei jeweils ein lokales Prozessdatenmanagement (Prozessdaten Mng.) zur Verwaltung von Bezeichnern und Speicheradressen der Werte vorgesehen ist und in jeder der Steuerungen (n1, n2) zumindest eine Anwendung (lokal_app1, lokal_app3) betrieben wird. Dabei wird auf jeder der Steuerungen ein Proxydienst eingerichtet, wobei in dem Fall, in dem eine lokale Anwendung (lokal_app1, lokal_app3) bei dem lokalen Prozessdatenmanagement (Prozessdaten Mng.) die Adressinformation eines lokal nicht verfügbaren Wertes anfordert, das Prozessdatenmanagement (Prozessdaten Mng.) die Anforderung an den lokalen Proxydienst weiterleitet, dieser die Anfrage an zumindest einen weiteren Proxydienst zumindest einer weiteren der Steuerungen weiterleitet, dort ein weiterer Proxydienst den Wert aus einem lokalen Prozessabbild (app1Shm, pxy3Shm) der weiteren Steuerung ausliest und an den Proxydienst der anfordernden Steuerung weiterleitet, wonach der Proxydienst der anfordernden Steuerung den Wert in das lokale Prozessabbild (app1Shm, pxy3Shm) einfügt und die zugehörige Adressinformation im lokalen Prozessdatenmanagement (Prozessdaten Mng.) registriert. Dadurch können auch Daten anderer Steuerungen lokal verfügbar gemacht werden.

## Beschreibung

Die Erfindung betrifft ein Verfahren zum automatisierten Austausch von Prozessdaten zwischen zumindest zwei industriellen Steuerungen gemäß dem Patentanspruch 1, und eine Anordnung Verfahren zum automatisierten Austausch von Prozessdaten zwischen zumindest zwei industriellen Steuerungen gemäß dem Patentanspruch 10.

Aktuelle Steuerungseinheiten haben ein lokales Prozessabbild, auf das sie schreibend und lesend zugreifen. Daten, die in diesem Prozessabbild vorhanden sind, können von den Steuerungsfunktionen benutzt werden. Daten des Prozessabbildes sind insbesondere sog. I/O-Werte, also Sensordaten und Aktordaten.

Externe Daten, d.h. Daten, die nicht über die digitalen und analogen Ein-/Ausgänge bzw. über Steuerungseinheiten-typische Busse wie Profinet gelesen/geschrieben werden, können nur über Schnittstellen bzw. Protokolle wie OPC-UA von externen Applikationen in die Steuerungseinheit eingebracht oder ausgegeben werden, sind dann aber nicht unmittelbarer Bestandteil des lokalen Prozessabbildes. Insbesondere sind die Prozessabbilder zweier verschiedener Steuerungseinheiten nicht gegenseitig sichtbar und damit auch nicht zugreifbar. Neue externe Daten müssen somit händisch von den Applikationen in das lokale Prozessabbild eingebracht werden. Normalerweise sind dafür auch ein Stoppen und ein anschließender Neustart der beteiligten Anwendungen erforderlich.

Ein Datenaustausch zwischen Applikationen auf unterschiedlichen Geräten ist möglich, beispielsweise über ein OPC-UA - Protokoll oder im Fall von PLCs (PLC = Programmable Logic Controller = Speicherprogrammierbare Steuerung) des Herstellers Siemens mit Hilfe des S7-Protokolls. Dies geschieht durch den Programmierer händisch in der Engineeringphase, d.h. es erfolgt nicht automatisch und es kann nicht im laufenden Betrieb durchgeführt werden.

Soll eine Anwendung auf Daten einer entfernten Steuerungseinheit zugreifen, so muss diese Anwendung "per Hand" auf einen entsprechenden Datenkanal zugreifen. Ein lokal vorhandener OPC UA-Server kann dies nicht automatisiert erledigen, da er keine Client-Fähigkeit besitzt. Für den Fall, das ein lokaler OPC UA-Client vorhanden ist, muss die Datenverknüpfung "per Hand" erfolgen oder es muss ein Matching-Algorithmus in Kraft treten.

Den bekannten Lösungen ist gemein, dass Anwendungen auf unterschiedliche Art und Weise auf die Daten eines lokal verfügbaren Prozessabbildes einerseits und auf externe Daten andererseits zugreifen müssen, so dass die Anwendungen immer auf die externen Zugriffe eingerichtet und/oder konfiguriert werden müssen, was insbesondere bei bestehenden Anwendungen ("Brownfield"-Anwendungen, "Legacy"-Anwendungen) oft nur mit Aufwand oder überhaupt nicht möglich ist. Insbesondere verhindert dies die flexible Verteilung von Anwendungen und Peripherie in einem Anlagenverbund, beispielsweise für Load-Balancing, redundante Systeme oder bei flexiblen oder modularen Produktionsanlagen.

Es ist also eine Aufgabe der vorliegenden Erfindung, den Zugriff von Anwendungen auf externe Daten, insbesondere externe Prozessabbilder, zu vereinfachen.

Eine Kernidee zur Lösung dieser Aufgabe ist, dass durch eine lokale Software, einen sogenannten Proxydienst (kurz: Proxy), die Daten, die mit externen Einheiten ausgetauscht werden sollen, in das lokale Prozessabbild hineingeschrieben bzw. aus diesem ausgelesen werden. Dabei werden Speicherzellen (z.B. I/O-Werte, Variablen oder Register), die noch nicht zum lokalen Prozessabbild gehören, dort angelegt bzw. allokiert, vorzugsweise durch ein lokales Prozessdatenmanagement, oder nach dem Anlegen zumindest im lokalen Prozessdatenmanagement registriert. Somit sind die "externen" Daten und Werte im lokalen Prozessabbild verfügbar, ohne dass die Anwendung geändert werden muss; die "neuen" Daten sind normaler Bestandteil des Prozessabbildes und die Anwendung muss zum Zugriff weder neu gestartet, noch in einer anderen Art umkonfiguriert werden. Eine weitere Kernidee der Erfindung betrifft die Beschaffung externer Daten, deren Speicheradresse durch eine lokale Anwendung beim lokalen Prozessdatenmanagement angefordert werden, durch den Proxydienst, wobei diese externen Daten dann im lokalen Prozessdatenmanagement registriert und in das lokale Prozessabbild geschrieben und damit der Anwendung verfügbar gemacht werden.

Die Aufgabe wird insbesondere mit dem Verfahren nach Patentanspruch 1 gelöst. Dabei wird ein Verfahren zum automatisierten Austausch von Prozessdaten zwischen zumindest zwei industriellen Steuerungen vorgeschlagen, wobei jede der Steuerungen ein lokales Prozessabbild mit den lokal verwendeten Prozessdaten umfasst, wobei die Prozessdaten aus einer Anzahl Werten bestehen, insbesondere Werte für Sensoren und/oder Aktoren einer industriellen Automatisierungsanordnung, wobei jeweils ein lokales Prozessdatenmanagement zur Verwaltung von Bezeichnern und Speicheradressen der Werte vorgesehen ist, wobei in jeder der Steuerungen zumindest eine Anwendung betrieben wird, und wobei die Anwendung Informationen über die Bezeichner und Speicheradressen der Werte mit dem lokalen Prozessdatenmanagement austauscht und Werte im lokalen Prozessabbild mithilfe der Informationen liest und/oder schreibt. Dabei wird auf jeder der Steuerungen ein Proxydienst eingerichtet, wobei in dem Fall, in dem eine lokale Anwendung bei dem lokalen Prozessdatenmanagement die Adressinformation eines lokal nicht verfügbaren Wertes anfordert, in einem ersten Schritt das Prozessdatenmanagement die Anforderung an den lokalen Proxydienst weiterleitet, in einem zweiten Schritt der lokale Proxydienst die Anfrage an zumindest einen weiteren Proxydienst zumindest einer weiteren der Steuerungen weiterleitet, in einem dritten Schritt der weitere Proxydienst den Wert aus einem lokalen Prozessabbild der weiteren Steuerung ausliest und an den Proxydienst der anfordernden Steuerung weiterleitet, in einem vierten Schritt der Proxydienst der anfordernden Steuerung den Wert in das lokale Prozessabbild einfügt und die zugehörige Adressinformation im lokalen Prozessdatenmanagement registriert, in einem fünften Schritt das lokale Prozessdatenmanagement die Anforderung der lokalen Anwendung mit der Adressinformation beantwortet, und in einem sechsten Schritt die Anwendung mittels der Adressinformation auf den Wert zugreift. Durch dieses Verfahren kann eine Anwendung in gleicher Weise, wie sie auf lokal verfügbare Daten in einem Prozessabbild zugreift, auf extern verfügbare Daten zugreifen, ohne dass die Anwendung neu gestartet, geändert oder umkonfiguriert werden muss.

Die Aufgabe wird außerdem durch eine Anordnung zum automatisierten Austausch von Prozessdaten zwischen zumindest zwei industriellen Steuerungen gelöst, wobei auf jeder der Steuerungen ein lokales Prozessabbild mit den lokal verwendeten Prozessdaten gespeichert ist, wobei die Prozessdaten aus einer Anzahl Werten bestehen, insbesondere Werte für Sensoren und/oder Aktoren einer industriellen Automatisierungsanordnung, wobei auf jeder Steuerung ein lokales Prozessdatenmanagement zur Verwaltung von Bezeichnern und Speicheradressen der Werte installiert ist, und wobei in jeder der Steuerungen zumindest eine Anwendung betrieben wird, wobei die Anwendung Informationen über die Bezeichner und Speicheradressen der Werte mit dem lokalen Prozessdatenmanagement austauscht und Werte im lokalen Prozessabbild mithilfe der Informationen liest und/oder schreibt. Dabei ist auf jeder der Steuerungen ein Proxydienst eingerichtet, wobei das Prozessdatenmanagement derart ausgestaltet ist, dass in dem Fall, in dem eine lokale Anwendung bei dem lokalen Prozessdatenmanagement die Adressinformation eines lokal nicht verfügbaren Wertes anfordert, in einem ersten Schritt das Prozessdatenmanagement die Anforderung an den lokalen Proxydienst weiterleitet, und wobei der lokale Proxydienst dazu eingerichtet ist, dass dieser in einem zweiten Schritt die Anfrage an zumindest einen weiteren Proxydienst zumindest einer weiteren der Steuerungen weiterleitet, wobei der weitere Proxydienst dazu eingerichtet ist, dass dieser in einem dritten Schritt den Wert aus einem lokalen Prozessabbild der weiteren Steuerung ausliest und an den Proxydienst der anfordernden Steuerung weiterleitet, und dass der Proxydienst der anfordernden Steuerung dazu ausgestaltet ist, dass dieser in einem vierten Schritt den Wert in das lokale Prozessabbild einfügt und die zugehörige Adressinformation im lokalen Prozessdatenmanagement registriert, wonach vorgesehen ist, dass in einem fünften Schritt das lokale Prozessdatenmanagement die Anforderung der lokalen Anwendung mit der Adressinformation beantwortet, und wonach in einem sechsten Schritt ein Zugriff der Anwendung mittels der Adressinformation auf den Wert vorgesehen ist. Durch diese Anordnung können die bereits zuvor anhand des Verfahrens diskutierten Vorteile erzielt werden.

Vorteilhafte Ausgestaltungen sind in den abhängigen Patentansprüchen angegeben; deren Merkmale und Vorteile gelten gleichermaßen für das erfindungsgemäße Verfahren und für die erfindungsgemäße Anordnung. Vorteilhafte Ausgestaltungen können auch in sinnfälliger Weise miteinander kombiniert werden.

Vorteilhaft wird durch den oder mit dem Proxydienst jeweils zumindest eine Proxy-Anwendung instanziiert, wobei die Proxy-Anwendung Zugriffe auf das lokale Prozessabbild durchführt. Dadurch werden die lokalen Zugriffe auf das Prozessabbild funktional von der Kommunikation mit den anderen Proxies getrennt, so dass die Proxy-Anwendung analog zu einer Steuerungsanwendung programmiert werden kann, was die Wiederverwendung von Programmcode vereinfacht.

In einer vorteilhaften Variante kommuniziert die zumindest eine Anwendung mit dem Prozessdatenmanagement derselben Steuerung mittels einer Applikationsschnittstelle, wobei der Proxydienst und/oder die Proxy-Anwendung mittels einer funktionsgleichen oder identischen Applikationsschnittstelle mit dem Prozessdatenmanagement derselben Steuerung kommuniziert.

Damit werden Zugriffsprozesse vereinheitlicht und damit insgesamt vereinfacht.

Vorteilhaft übermittelt in dem zweiten Schritt der anfragende lokale Proxydienst die Anfrage an einen Distributionsdienst, und der Distributionsdienst leitet die Anfrage an den zumindest einen Proxydienst der zumindest einen weiteren der Steuerungen weiter. Dadurch ist das System einfacher zu administrieren, weil der Distributionsdienst fest eingestellter Adressat für die Anfragen vieler oder aller Proxydienste ist und die lokalen Proxydienste keine Informationen darüber benötigen, bei welcher anderen Komponente die gesuchten Daten verfügbar sind. Vorteilhaft wird dazu ein systemweit gültiges Bezeichner-Schema verwendet, um die doppelte Vergabe von Bezeichnern zu vermeiden.

Vorteilhaft unterhält der Distributionsdienst eine Datenbank, wobei die Datenbank Informationen darüber, welcher Wert auf welcher der Steuerungen verfügbar ist, umfasst. Dabei überprüft der Distributionsdienst beim Eingang einer Anfrage, ob die Datenbank den angeforderten Wert lokalisieren kann, wobei im positiven Fall die Anfrage nur an die Proxyeinheit der weiteren Steuerung mit dem verfügbaren Wert weitergeleitet wird, und wobei im negativen Fall die Anfrage an viele oder alle die Proxyeinheiten vieler oder aller weiteren Steuerungen weitergeleitet wird.

Dabei ist vorgesehen, dass der Distributionsdienst in dem dritten Schritt den Wert von diesem Proxydienst empfängt, zwischenspeichert und an einen oder mehrere anfragende Proxydienste weiterleitet. Der Distributionsdienst vermeidet also insbesondere bei dynamischer Architektur des Gesamtsystems eine permanente Umkonfigurierung der lokalen Proxydienste.

In einer Variante erfolgt durch den Proxydienst ein lesender und/oder schreibender Zugriff auf das Prozessabbild. In einer abweichenden Variante kann, insbesondere aus Sicherheitsgründen, lesender und/oder schreibender Zugriff reglementiert sein, beispielsweise durch das Aufspielen einer sog. "Policy" oder eines Zertifikates.

Vorteilhaft übertragen die Proxydienste den Wert mittels eines Internet-Protokolls, wobei auch Zugriffsprotokolle des OPC/UA-Standards eingesetzt werden, was eine gut gesicherte und zuverlässige Kommunikation ermöglicht.

In einer vorteilhaften Variante ist durch den oder mit dem Proxydienst jeweils zumindest eine Proxy-Anwendung zur Durchführung von Zugriffen auf das lokale Prozessabbild instanziiert. Die Trennung der Proxy-Anwendung vom Proxydienst ermöglicht eine modulare Programmierung insbesondere beim Einsatz unterschiedlicher Typen von Steuerungen mit jeweils unterschiedlich organisiertem Prozessabbild.

Ausführungsbeispiele für das erfindungsgemäße Verfahren werden nachfolgend anhand der Zeichnungen erläutert. Diese dienen gleichzeitig der Erläuterung einer erfindungsgemäßen Anordnung.

Dabei zeigen:
- Figur 1: Eine Anordnung zur Erläuterung der Problemstellung aus dem Stand der Technik,
- Figur 2: eine grundlegende Lösung mit direkter Kommunikation zwischen den Proxydiensten und direkter Übertragung der Werte/Daten zwischen den Steuerungseinheiten,
- Figur 3: eine alternative Lösung mit Vermittlung zwischen den Proxydiensten durch einen Distributor und direkter Übertragung der Werte/Daten zwischen den Steuerungseinheiten,
- Figur 4: ein Beispiel für die in dem Distributor vorliegenden Informationen, und
- Figur 5: eine weitere alternative Lösung mit Vermittlung zwischen den Proxydiensten durch einen Distributor und Übertragung der Werte/Daten zwischen den Steuerungseinheiten mittels des Distributors.

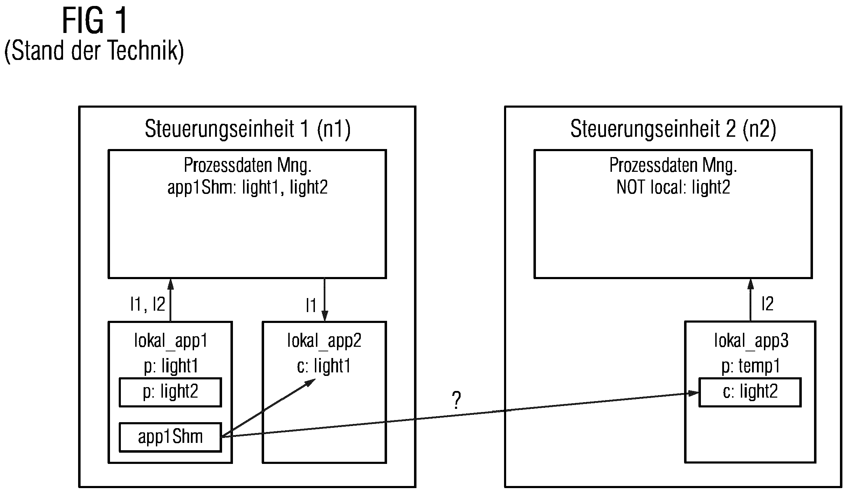

Die Figur 1 zeigt den Ausgangszustand aus dem Stand der Technik. Zwei Steuerungseinheiten Steuerungseinheit 1 (n1) und Steuerungseinheit 2 (n2) arbeiten streng lokal, d.h. die Anwendungen lokal_app1, local_app2 innerhalb der Steuerungseinheit 1 können gegenseitig nur auf lokalen Daten zugreifen: lokal_app1 schreibt die Daten lightl und light2. Die parallel zur ersten Anwendung lokal_app1 installierte zweite Anwendung lokal_app2 liest das von ihm gewünschte Datum lightl.

In den Figuren sind lesende Zugriffe mit c (c: consumed = lesend) und schreibende Zugriffe mit p (p: provided = schreibend) gekennzeichnet.

Die Daten (z.B. Variablen, Tags, Register o.ä.) lightl und light2 sind in einem Prozessabbild in einem Speicherbereich appl_Shm gespeichert, welcher in dieser bevorzugten Ausführungsform ein geteilter, gemeinsamer Speicher (Shm = shared memory) der Steuerungseinheit 1 (n1) bzw. der darauf installierten Anwendungen ist.

Die Verwaltung und das sog. "Matching" der Daten und deren Bezeichner von und für verschiedene Applikationen bzw. Anwendungen lokal_appl, lokal_app2 erfolgen über den Prozessdaten-Manager (in den Figuren als "Prozessdaten_Mng." bezeichnet). Im vorliegenden Beispiel hält der Prozessdaten-Manager die Informationen darüber, dass im Prozessabbild der Anwendung applShm die Daten bzw. Variablen lightl und light2 liegen; dazu sind die Speicheradressen (nicht dargestellt) dieser Daten abrufbar. Die Informationen 11, 12 über die von der Anwendung lokal_app1 bereitgestellten Daten, also die Bezeichner lightl, light2 und deren Speicherinformationen (z.B. Speicheradressen) werden durch die Anwendung lokal_app1 dem Prozessdaten-Manager gemeldet, von diesem gespeichert und im Zuge von Abfrageprozessen anderen Anwendungen lokal_app2 beispielsweise für Lesezugriffe bereitgestellt.

Obwohl in der Figur 1 der Speicher applShm der Anwendung lokal_app1 zugeordnet ist, kann dieser von allen lokalen Anwendungen lokal_appl, lokal_app2 lesend zugegriffen werden. Jede Anwendung allokiert ihren eigenen Speicher nur für das eigene Prozessabbild, d.h. nur für die Daten, die sie selbst schreibt. Es genügt also für jede Steuerungseinheit 1, 2 (n1, n2) jeweils ein Speicherbereich für das jeweilige lokale Prozessabbild; abweichende Ausführungsformen sind jedoch ohne Einschränkungen möglich. Wesentlich ist, dass der Speicher für alle Daten von je einem (oder ggf. auch mehreren) Prozessdatenmanager(n) auf jeder Steuerungseinheit 1, 2 (n1, n2) verwaltet wird.

Die Anwendung lokal_app3 ist installiert und läuft auf Steuerungseinheit 2, schreibt selbst das Datum templ (für die weiteren Betrachtungen ist das irrelevant) und möchte das Datum light2 konsumieren. Das Datum (Variable o.ä.) light2 ist aber auf dieser Steuerungseinheit 2 lokal nicht vorhanden, die Anwendung lokal_app3 kann somit zunächst nicht ausgeführt werden.

Die zweite Steuerungseinheit 2 (n2) benötigt also lesenden Zugriff auf die Variable light2, die von der Anwendung lokal_app1 im lokalen Prozessabbild applShm der ersten Steuerungseinheit 1 (n1) angelegt und regelmäßig aktualisiert wird. Das Fragezeichen in der Figur 1 verdeutlicht das Problem, dass die Variable light2 über die Grenzen der Steuerungseinheit 1 (n1) hinaus verfügbar gemacht werden soll.

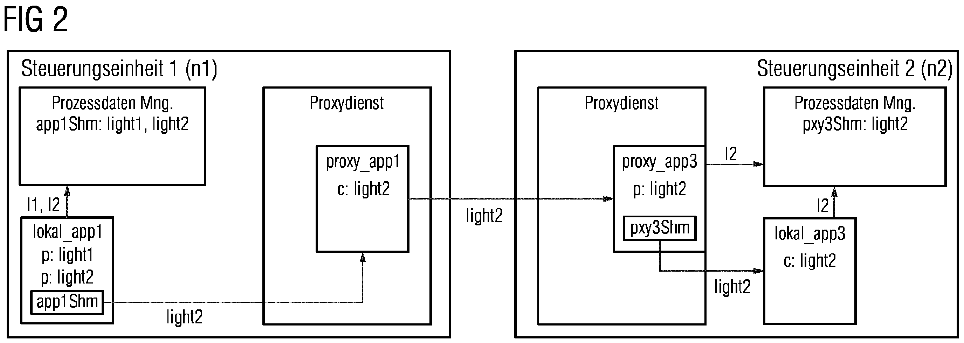

Die Figur 2 beschreibt eine grundlegende Lösungsvariante (nachfolgend als Variante 1A bezeichnet) des Distributionsmechanismus'. Neben dem Prozessdaten-Manager befindet sich auf jeder Steuerungseinheit erfindungsgemäß zumindest ein Proxydienst. Dieser bewerkstelligt lokal den Datenaustausch mit seinem jeweiligen Pendant auf den anderen Steuerungseinheiten. Der jeweilige Proxydienst agiert gegenüber dem jeweils lokalen Prozessdatenmanagement und bezüglich des Zugriffs auf das jeweilige lokale Prozessabbild genauso wie die lokal installierten Anwendungen, d.h., dass der Proxydienst Daten (Variablen) beim Prozessdatenmanagement sowohl registrieren, als auch Informationen über die lokal vorhandenen Daten aus dem Prozessdatenmanagement abrufen kann und vorzugsweise auch durch das Prozessdatenmanagement über diese Informationen oder über das Vorliegen neuer Werte benachrichtigt werden kann, sofern es im Prozessdatenmanagement einen sog. Push-Dienst dafür gibt.

In der Figur 2 ist dargestellt, dass analog zu der Ausgangssituation aus der Figur 1 die Anwendung lokal_appl Daten bereitstellt, nämlich die Variablen lightl, light2 dem Prozessabbild applShm zur Verfügung stellt, wobei die beiden Variablen lightl, light2 im Prozessdatenmanagement mit den Datensätzen 11, 12 registriert werden.

Weitere Ausgangssituation ist - wie bereits anhand der Figur 1 erläutert -, dass die auf der Steuerungseinheit 2 angeordnete Anwendung lokal _app3 Zugriff auf die Variable light2 benötigt, und nunmehr dazu eine Abfragemeldung light2 (12) an das lokale Prozessdatenmanagement der Steuerungseinheit 2 richtet; soweit ist der Ablauf zum Stand der Technik identisch. Da in dem lokalen Prozessdatenmanagement der Steuerungseinheit 2 keine Adressinformationen über die zu lesende Variable light2 vorliegen, sendet das Prozessdatenmanagement der Steuerungseinheit 2 eine entsprechende Anfrage (nicht dargestellt) an den lokalen Proxydienst der Steuerungseinheit 2. Im vorliegenden Ausführungsbeispiel sind in dem lokalen Proxydienst der Steuerungseinheit 2 die Adressdaten des lokalen Proxydienstes der Steuerungseinheit 1 fest einprogrammiert; in einer später beschriebenen Variante kann auch ein sog. Distributor adressiert sein, bei dem wiederum eine Vielzahl von Proxydiensten registriert ist. In einer weiteren, alternativen Ausführungsform können in dem lokalen Proxydienst der Steuerungseinheit 2 auch mehrere Adressinformationen mehrerer anderer, externer Proxydienste vorliegen, die zeitgleich oder nacheinander kontaktiert werden.

Der lokale Proxydienst der Steuerungseinheit 2 kommuniziert nun die Abfrage nach dem gesuchten Datum light2 an den Proxydienst der Steuerungseinheit 1, wonach dieser Proxydienst der lokalen Steuerungseinheit 1 eine entsprechende Abfragenachricht (nicht dargestellt) an das lokale Prozessdatenmanagement der Steuerungseinheit 1 richtet. Diese Abfragenachricht entspricht formal und inhaltlich weitgehend derselben Abfragenachricht, die durch die Anwendung lokal_app3 an das lokale Prozessdatenmanagement der Steuerungseinheit 2 gerichtet war. Mit anderen Worten: der Proxydienst bzw. die Proxy-Anwendung der lokalen Steuerungseinheit verhält sich gegenüber dem lokalen Prozessdatenmanagement (Registrierung der Variablen o.ä., Abruf von Adressinformationen von Daten im lokalen Prozessabbild) und in Bezug auf die Zugriffe (Lesen und Schreiben von Daten) auf das lokale Prozessabbild wie eine "reguläre" Anwendung.

Im vorliegenden Ausführungsbeispiel geschieht die Kommunikation zwischen dem Proxydienst und dem Prozessdatenmanagement sowie das später erläuterte "Handling" der Daten zwischen dem jeweiligen Proxydienst und dem jeweiligen Prozessabbild durch eine jeweilige separate Proxy-Anwendung, die mit dem Proxydienst derselben Steuerungseinrichtung verknüpft ist und von diesem angesteuert wird.

Als Antwort auf die zuletzt genannte Abfragenachricht des lokalen Proxydienstes der Steuerungseinheit 1 an das lokale Prozessdatenmanagement der Steuerungseinheit 1 stellt dieses Prozessdatenmanagement diesem Proxydienst die Adressinformationen über das geforderte Datum light2 zur Verfügung, wonach der lokale Proxydienst der Steuerungseinheit 1 bzw. die damit verknüpfte Proxy-Anwendung proxy_app1 aus dem Speicher applShm den Wert für das Datum light2 ausliest, an den anderen Proxydienst der Steuerungseinheit 2 weiterleitet, wonach dieser selbst oder - wie im gegenwärtigen Ausführungsbeispiel - die Proxy-Anwendung proxy_app3 die Variable light2 im lokalen Prozessabbild (nicht separat dargestellt) der Steuerungseinheit 2 einspeichert, wobei der Proxydienst der Steuerungseinheit 2 im selben Zug die damit jetzt neu vorhandene Variable light2 des lokalen Speichers bzw. Prozessabbildes mit ihren Adressinformationen im lokalen Prozessdatenmanagement der Steuerungseinheit 2 mit einer Registrierungsmeldung 12 registriert. Nun kann das lokale Prozessdatenmanagement der Steuerungseinheit 2 die ursprüngliche Abfragemeldung der Anwendung lokal _app3 mit den neu registrierten Adressinformationen beantworten, wobei diese Antwortnachricht formal genau derjenigen Antwortnachricht entspricht, die auch im klassischen Fall eines rein lokalen Zugriffs von einem Prozessdatenmanagement an eine Anwendung erfolgt wäre; die Antwort ist nur verglichen mit einer rein lokal beantworteten Abfrage ggf. durch den zwischenzeitlichen Abfrageprozess bei der anderen Steuerungseinheit 1 zeitverzögert. Nun kann die Anwendung lokal_app3 der Steuerungseinheit 2 auf das in das lokale Prozessabbild der Steuerungseinheit 2 "gespiegelte" Datum light2 zugreifen und den Betrieb fortsetzen.

Die lokalen Anwendungen lokal_appl, lokal_app3 funktionieren also genau wie im Stand der Technik und brauchen deswegen gegenüber einer klassischen Lösung nicht verändert werden. Das jeweils lokale Prozessdatenmanagement ist jedoch gegenüber dem Stand der Technik derart erweitert, dass bei nicht zu beantwortenden Adressabfragen nach Daten oder Variablen, die dem Prozessdatenmanagement noch nicht bekannt sind, eine solche Abfrage an einen lokalen Proxydienst weitergeleitet wird und eine etwaige Antwort mit neuen Adressdaten empfangen, registriert und an die anfragende Anwendung weitergeleitet wird. Bezüglich der Kommunikation mit dem lokalen Prozessabbild verhält sich der Proxydienst jeweils wie eine herkömmliche lokale Anwendung, wobei dieses Interface auch in einer separaten Proxy-Anwendung gekapselt sein kann, was programmtechnische Vorteile bringt. Für die Kommunikation zwischen den jeweiligen Proxydiensten der verschiedenen Steuerungseinheiten kann jedes geeignete Kommunikationsmedium und Kommunikationsprotokoll verwendet werden, insbesondere industrielle Kommunikationsprotokolle (z.B. OPC UA), Tunnelverbindungen, Cloud-Verbindungen, virtuelle private Netzwerke und dergleichen.

Zwischen den Proxydiensten können auch Aktualisierungsmeldungen ausgetauscht werden, sodass beispielsweise jedes Mal, wenn die lokale Anwendung lokal_appl die "abonnierte" Variablen light2 erneuert bzw. updatet, eine entsprechende automatische erneute Übertragung des Wertes dieser Variablen light2 zu der anfragenden Steuerungseinheit 2 erfolgt. Gegebenenfalls kann die konsumierende Anwendung lokal _app3 dann auch über das Vorliegen eines aktualisierten Datums benachrichtigt werden, zumindest aber kann der Wert im lokalen Prozessabbild der Steuerungseinheit 2 upgedatet werden. Auch ein automatisches, regelmäßiges Update, beispielsweise im Zeitraster eines Zyklus der die Werte bereitstellenden Anwendung lokal_app1 oder in einem anderen Zeitraster, kann vorgesehen werden.

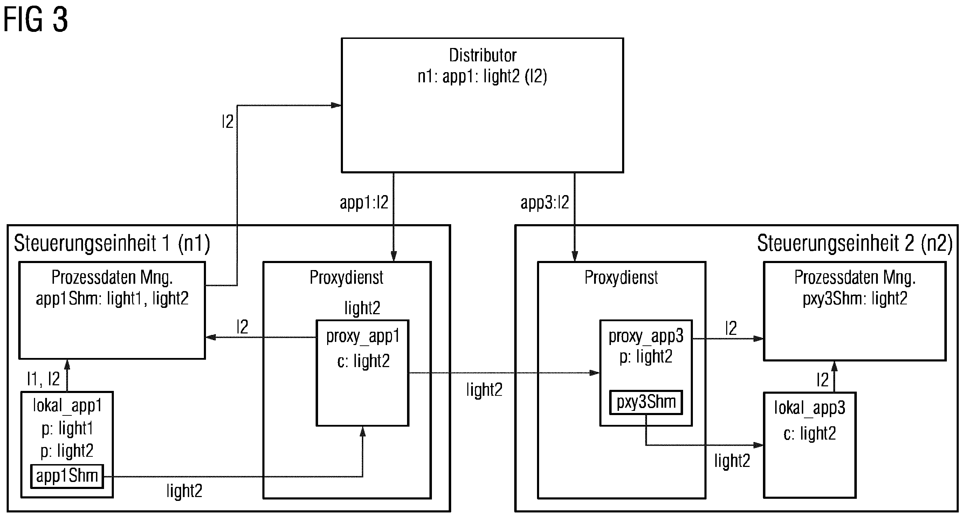

Die Figur 3 erläutert ausgehend von der anhand der Figur 2 geschilderten Ausgangslage eine alternative Ausführungsform der Lösung. Über eine technische Einheit, Distributor genannt, wird das von Steuerungseinheit 2 benötigte Datum light2 bei der Steuerungseinheit 1 abgefragt und der Anwendung lokal_app3 zur Verfügung gestellt.

Fehlt einer lokalen Anwendung ein bestimmtes Datum, in diesem Fall light2 für die lokal_app3, stellt der Proxydienst der eigenen Steuerungseinheit (in diesem Fall der Steuerungseinheit 2) gemäß der anhand der Figur 2 erläuterten Vorgehensweise eine Anfrage an alle Proxydienste der im IP-basierten Netz sichtbaren Steuerungseinheiten. Meldet sich ein Proxydienst mit dem entsprechenden Datum (in unserem Fall der Proxydienst von Steuerungseinheit 1), bauen die beiden beteiligten Proxydienste eine IP-basierte Datenverbindung auf und initiieren zusätzlich auf ihren jeweiligen Steuerungseinheiten sogenannte Proxy-Anwendungen, kurz "proxy _apps". Die proxy_apps funktionieren lokal identisch wie die jeweiligen Steuerungs-Anwendungen (lokal_apps) und benutzen die gleichen Schnittstellen zum Datenzugriff, daneben besitzen sie aber - wie erwähnt - die Möglichkeit der IP-Kommunikation.

Die Proxy-Anwendung proxy_appl auf Steuerungseinheit 1 konsumiert (liest) nun das Datum lightl der Anwendung lokal_app1, überträgt diesen Wert über die IP-Datenkommunikation an den Proxydienst der Steuerungseinheit 2. Die dortige Proxy-Anwendung proxy_app3 auf Steuerungseinheit 2 schreibt nun ihrerseits light2 in ein lokales Prozessabbild pxy3Shm dieser Steuerungseinheit, so dass die anfragende Anwendung lokal_app3 darauf zugreifen kann. Die lokal_app3 "merkt" dabei nicht, dass der nun von ihr konsumierte Wert light2 nicht lokal "generiert" wurde. In dem Fall, in dem eine weitere Anwendung lokal_app4 (nicht dargestellt) auf die Steuerungseinheit 2, die ihrerseits das Datum light2 liefert, kann der Prozessdaten-Manager in Zusammenarbeit mit dem Proxydienst die proxy_app3 beenden, so dass in diesem Fall dann die lokal_app3 das Datum light2 von lokal_app4 verwendet. Alternativ kann der Prozessdaten-Manager auf aufgrund von Qualitätskriterien entscheiden, welches Daten benutzt wird.

Soweit funktioniert die Variante der Figur 3 analog zu der zuvor geschilderten Ausführungsform. Der Unterschied besteht nun darin, dass die lokalen Proxydienste der Steuerungseinheiten durch einen zentralen Distributor (eine Art Adressierungs-Server oder Vermittler) bei der Vermittlung ("Matching") der Daten "unterstützt" werden; dazu erfolgt anstelle der direkten Kommunikation der Proxyeinheiten untereinander nun die Kommunikation indirekt über eine zentrale Vermittlung. Nach erfolgtem Matching erfolgt die Datenkommunikation für das Datum light2 dann in einer ersten Ausgestaltung direkt ("Peer-to-Peer") zwischen den beteiligten Proxy-Anwendungen (proxy_apps) der Proxydienste, wozu der Distributor die entsprechenden Kommunikationsadressen bereitstellt. Dieser zentrale Distributor vereinfacht es für die lokalen Proxydienste, die Anfragen der Anwendungen bzw. der Prozessdatenmanager zu bearbeiten. Der lokale Proxydienst muss somit nur den zentralen Distributor-Manager kennen und kann alle Anfragen über diesen abarbeiten. Ist dies nicht der Fall, so müsste er wie bei ersten Variante alle Proxydienste abfragen (z.B. per Multicast oder Broadcast).

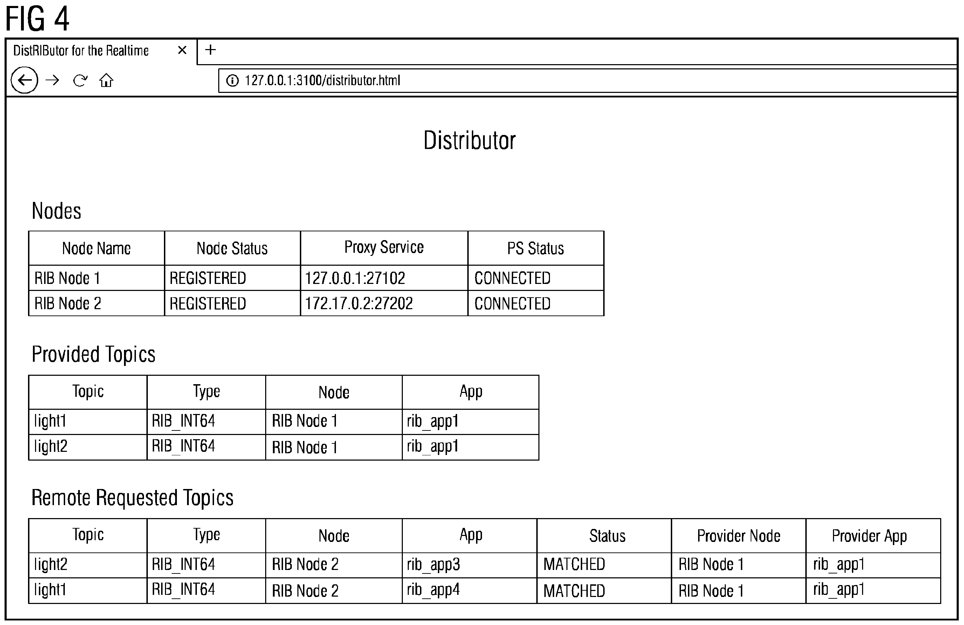

Die Figur 4 zeigt die gemäß den vorherigen Beispielen im Distributor vorliegenden Informationen. Dabei sind in der ersten, oberen Tabelle "Nodes" die sogenannten KnotenInformationen gelistet, wobei in der linken Spalte der Name der jeweiligen Steuerungseinheit verzeichnet ist, danach eine Statusinformation, die angibt, ob die entsprechende Steuerungseinheit korrekt im Distributor angemeldet ist. Danach folgt die Adressinformation, also die IP-Adresse und die IP-Portnummer, des jeweiligen Proxydienstes der jeweiligen Steuerungseinheit (Knoten), gefolgt von einer Statusinformation, die angibt, ob eine Kommunikationsverbindung zum jeweiligen Proxydienst besteht.

In der zweiten Tabelle "Provided Topics" sind Name und Typ-Information der verfügbaren Daten bzw. Variablen verzeichnet, zusammen mit der Information, auf welcher der Steuerungseinheiten (Knoten) das entsprechende Datum verfügbar ist und von welcher Anwendung das Datum bereitgestellt wird.

Schließlich sind in der letzten Tabelle "Remote Requested Topics" die auszutauschenden Daten, die sogenannten Matchings, verzeichnet. Nach dem Namen des entsprechenden Datums oder der entsprechenden Variablen in der linken Spalte folgt zunächst einmal die Typ-Information (siehe zweite Tabelle), danach die Information darüber, welcher der Steuerungen das entsprechende Datum bereitgestellt werden soll und welche Anwendung das Ziel ("Target"), also der Konsument, des Datums ist. Die nächste Spalte bezieht sich auf den Status, in diesem Fall "matched", was bedeutet, dass die Verknüpfung etabliert ist. Danach folgt die Information darüber, welcher Steuerungseinheit das entsprechende Datum entstammt und welche Anwendung das entsprechende Datum bereitstellt ("Source", "Provider"). Die letztgenannten Informationen entstammen der zweiten Tabelle.

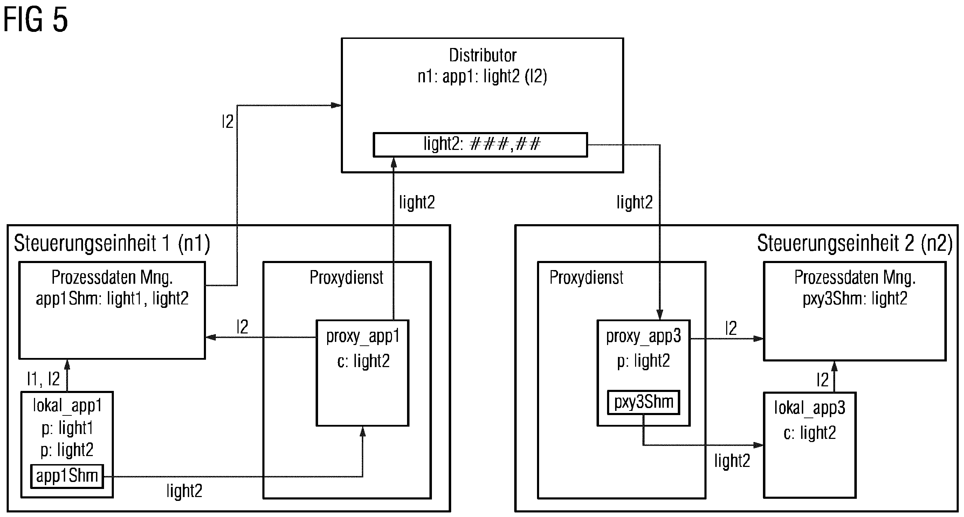

Die Figur 5 zeigt eine abweichende Ausgestaltung der Ausführungsform aus der Figur 3, bei der der zentrale Distributor nicht nur wie in der zuvor geschilderten Variante für das Matching der Daten zuständig ist. Er bewerkstelligt auch den Datenaustausch als Ansprechpartner für die Proxy-Anwendungen ("proxy_apps") der Proxydienste. Diese Variante ist für Netzwerke mit zahlreichen Steuerungseinheiten effizienter. Wenn beispielsweise etwa das Datum light2 nicht nur von einem Proxydienst angefordert würde, sondern beispielsweise von 5 Proxydiensten, muss sich in dieser Ausführungsform der liefernde Proxydienst nur um eine IP-Datenverbindung zum zentralen Distributor-Manager kümmern und das Datum auch nur einmal übertragen. Die Datenverbindungen zu den konsumierenden Proxydiensten würde der Distributor-Manager verwalten. Weiterhin können somit alle versendeten Daten auch im zentralen Distributor-Manager eingesehen und beobachtet werden; der Distributor hat dazu auch eine sog. "Cache"-Funktion. Dies hat allerdings auch den Nachteil, dass durch den Umweg über den zentralen Distributor-Manager die Daten zweimal gesendet und kopiert werden müssen, also 2 "Hops" nacheinander notwendig sind, was die Latenz verlängern kann.

Die unterschiedlichen Varianten haben jeweils Vor und Nachteile. Ja nach Anforderungen der Anwendungen bzw. Applikationen (z.B. Latenz, Anzahl Verbindungen, etc.) können die Varianten auch gezielt ausgewählt oder gemischt eingesetzt werden. Bei einer Kopplung mit Quality-of-Service Attributen kann somit je nach Anforderungen jeweils die passende Verbindung gewählt werden.

Entscheidende Neuerung ist die Einführung eines bei Bedarf automatisch initiierten Proxydienstes auf den Steuerungseinheiten. Dies bietet folgende Vorteile:
- Keine händische Programmierung des Nutzers notwendig, um Daten nicht lokaler Applikationen zu verwenden.
- Kein Stopp und Neustart der Applikationen notwendig, d.h. das Verfahren funktioniert im laufenden Betrieb.
- Bestehende Applikationen bleiben bei der Nutzung unberührt und unverändert.
- Eine Anpassung der Programmier-API für nicht-lokale Daten ist nicht erforderlich, da der Datenzugriff auf die nicht-lokalen Daten über die bestehende API geschieht.
- Je nach Anforderungen der Applikationen und vorhandener Infrastruktur können verschieden Kommunikationswege optimiert werden.

## Patentansprüche

1. Verfahren zum automatisierten Austausch von Prozessdaten zwischen zumindest zwei industriellen Steuerungen (n1, n2),
wobei jede der Steuerungen (n1, n2) ein lokales Prozessabbild (app1Shm, pxy3Shm) mit den lokal verwendeten Prozessdaten umfasst,
wobei die Prozessdaten aus einer Anzahl Werten bestehen, insbesondere Werte für Sensoren und/oder Aktoren einer industriellen Automatisierungsanordnung,
wobei jeweils ein lokales Prozessdatenmanagement (Prozessdaten Mng.) zur Verwaltung von Bezeichnern und Speicheradressen der Werte vorgesehen ist,
wobei in jeder der Steuerungen (n1, n2) zumindest eine Anwendung (lokal_app1, lokal_app3) betrieben wird, wobei die Anwendung (lokal_app1, lokal_app3) Informationen über die Bezeichner und Speicheradressen der Werte mit dem lokalen Prozessdatenmanagement (Prozessdaten Mng.) austauscht und Werte im lokalen Prozessabbild (app1Shm, pxy3Shm) mithilfe der Informationen liest und/oder schreibt,
**dadurch gekennzeichnet,**
**dass** auf jeder der Steuerungen ein Proxydienst eingerichtet wird,
**dass** in dem Fall, in dem eine lokale Anwendung (lokal_app1, lokal_app3) bei dem lokalen Prozessdatenmanagement (Prozessdaten Mng.) die Adressinformation eines lokal nicht verfügbaren Wertes anfordert,
in einem ersten Schritt das Prozessdatenmanagement (Prozessdaten Mng.) die Anforderung an den lokalen Proxydienst weiterleitet,
in einem zweiten Schritt der lokale Proxydienst die Anfrage an zumindest einen weiteren Proxydienst zumindest einer weiteren der Steuerungen weiterleitet,
in einem dritten Schritt der weitere Proxydienst den Wert aus einem lokalen Prozessabbild (app1Shm, pxy3Shm) der weiteren Steuerung ausliest und an den Proxydienst der anfordernden Steuerung weiterleitet,
in einem vierten Schritt der Proxydienst der anfordernden Steuerung den Wert in das lokale Prozessabbild (app1Shm, pxy3Shm) einfügt und die zugehörige Adressinformation im lokalen Prozessdatenmanagement (Prozessdaten Mng.) registriert,
in einem fünften Schritt das lokale Prozessdatenmanagement (Prozessdaten Mng.) die Anforderung der lokalen Anwendung (lokal_app1, lokal_app3) mit der Adressinformation beantwortet, und
in einem sechsten Schritt die Anwendung (lokal_appl, lokal_app3) mittels der Adressinformation auf den Wert zugreift.

2. Verfahren nach Patentanspruch 1,
**dadurch gekennzeichnet,**
**dass** durch den oder mit dem Proxydienst jeweils zumindest eine Proxy-Anwendung (proxy_app1, proxy_app3) instanziiert wird, wobei die Proxy-Anwendung (proxy_appl, proxy_app3) Zugriffe auf das lokale Prozessabbild (app1Shm, pxy3Shm) durchführt.

3. Verfahren nach Patentanspruch 2,
**dadurch gekennzeichnet,**
**dass** die zumindest eine Anwendung (lokal_app1, lokal_app3) mit dem Prozessdatenmanagement (Prozessdaten Mng.) derselben Steuerung mittels einer Applikationsschnittstelle kommuniziert, und
**dass** der Proxydienst und/oder die Proxy-Anwendung (proxy_app1, proxy_app3) mittels einer funktionsgleichen oder identischen Applikationsschnittstelle mit dem Prozessdatenmanagement (Prozessdaten Mng.) derselben Steuerung kommuniziert.

4. Verfahren nach einem der vorhergehenden Patentansprüche,
**dadurch gekennzeichnet,**
**dass** in dem zweiten Schritt der anfragende lokale Proxydienst die Anfrage an einen Distributionsdienst (Distributor) übermittelt und der Distributionsdienst (Distributor) die Anfrage an den zumindest einen Proxydienst der zumindest einen weiteren der Steuerungen weiterleitet.

5. Verfahren nach Patentanspruch 3,
**dadurch gekennzeichnet,**
**dass** der Distributionsdienst (Distributor) eine Datenbank unterhält,
wobei die Datenbank Informationen darüber, welcher Wert auf welcher der Steuerungen verfügbar ist, umfasst, wobei der Distributionsdienst (Distributor) beim Eingang einer Anfrage überprüft, ob die Datenbank den angeforderten Wert lokalisieren kann, und
wobei im positiven Fall die Anfrage nur an die Proxyeinheit der weiteren Steuerung mit dem verfügbaren Wert weitergeleitet wird, und wobei im negativen Fall die Anfrage an viele oder alle die Proxyeinheiten vieler oder aller weiteren Steuerungen weitergeleitet wird.

6. Verfahren nach Patentanspruch 3 oder 4,
**dadurch gekennzeichnet,**
**dass** der Distributionsdienst (Distributor) in dem dritten Schritt den Wert von diesem Proxydienst empfängt, zwischenspeichert und an einen oder mehrere anfragende Proxydienste weiterleitet.

7. Verfahren nach einem der vorhergehenden Patentansprüche,
**dadurch gekennzeichnet,**
**dass** durch den Proxydienst ein lesender und/oder schreibender Zugriff auf das Prozessabbild (app1Shm, pxy3Shm) erfolgt.

8. Verfahren nach einem der vorhergehenden Patentansprüche,
**dadurch gekennzeichnet,**
**dass** die Proxydienste mittels eines Internet-Protokolls den Wert übertragen.

9. Verfahren nach einem der vorhergehenden Patentansprüche,
**dadurch gekennzeichnet,**
**dass** die Proxydienste mittels eines OPC UA - Protokolls kommunizieren.

10. Anordnung zum automatisierten Austausch von Prozessdaten zwischen zumindest zwei industriellen Steuerungen, wobei auf jeder der Steuerungen ein lokales Prozessabbild (app1Shm, pxy3Shm) mit den lokal verwendeten Prozessdaten gespeichert ist,
wobei die Prozessdaten aus einer Anzahl Werten bestehen, insbesondere Werte für Sensoren und/oder Aktoren einer industriellen Automatisierungsanordnung,
wobei auf jeder Steuerung ein lokales Prozessdatenmanagement (Prozessdaten Mng.) zur Verwaltung von Bezeichnern und Speicheradressen der Werte installiert ist, und
wobei in jeder der Steuerungen zumindest eine Anwendung (lokal_app1, lokal_app3) betrieben wird, wobei die Anwendung (lokal_appl, lokal_app3) Informationen über die Bezeichner und Speicheradressen der Werte mit dem lokalen Prozessdatenmanagement (Prozessdaten Mng.) austauscht und Werte im lokalen Prozessabbild mithilfe der Informationen liest und/oder schreibt,
**dadurch gekennzeichnet,**
**dass** auf jeder der Steuerungen ein Proxydienst eingerichtet ist,
**dass** das Prozessdatenmanagement (Prozessdaten Mng.) derart ausgestaltet ist, dass
in dem Fall, in dem eine lokale Anwendung (lokal_app1, lokal_app3) bei dem lokalen Prozessdatenmanagement (Prozessdaten Mng.) die Adressinformation eines lokal nicht verfügbaren Wertes anfordert,
in einem ersten Schritt das Prozessdatenmanagement (Prozessdaten Mng.) die Anforderung an den lokalen Proxydienst weiterleitet,
**dass** der lokale Proxydienst dazu eingerichtet ist, dass dieser in einem zweiten Schritt die Anfrage an zumindest einen weiteren Proxydienst zumindest einer weiteren der Steuerungen weiterleitet,
**dass** der weitere Proxydienst dazu eingerichtet ist, dass dieser in einem dritten Schritt den Wert aus einem lokalen Prozessabbild (app1Shm, pxy3Shm) der weiteren Steuerung ausliest und an den Proxydienst der anfordernden Steuerung weiterleitet,
**dass** der Proxydienst der anfordernden Steuerung dazu ausgestaltet ist,
**dass** dieser in einem vierten Schritt den Wert in das lokale Prozessabbild (app1Shm, pxy3Shm) einfügt und die zugehörige Adressinformation im lokalen Prozessdatenmanagement (Prozessdaten Mng.) registriert, wonach vorgesehen ist,
**dass** in einem fünften Schritt das lokale Prozessdatenmanagement (Prozessdaten Mng.) die Anforderung der lokalen Anwendung (lokal_app1, lokal_app3) mit der Adressinformation beantwortet, und
wonach in einem sechsten Schritt ein Zugriff der Anwendung (lokal_appl, lokal_app3) mittels der Adressinformation auf den Wert vorgesehen ist.

11. Anordnung nach Patentanspruch 10,
**dadurch gekennzeichnet,**
**dass** durch den oder mit dem Proxydienst jeweils zumindest eine Proxy-Anwendung (proxy_app1, proxy_app3) zur Durchführung von Zugriffen auf das lokale Prozessabbild (app1Shm, pxy3Shm) instanziiert ist.

12. Anordnung nach Patentanspruch 10 oder 11,
**dadurch gekennzeichnet,**
**dass** ein Distributionsdienst (Distributor) zur Übermittlung der Anfrage des anfragenden lokale Proxydienstes an den zumindest einen Proxydienst der zumindest einen weiteren der Steuerungen vorgesehen ist.

13. Anordnung nach Patentanspruch 12,
**dadurch gekennzeichnet,**
**dass** der Distributionsdienst (Distributor) eine Datenbank mit Informationen darüber, welcher Wert auf welcher der Steuerungen verfügbar ist, umfasst,
wobei der Distributionsdienst (Distributor) dazu eingerichtet ist, beim Eingang einer Anfrage zu überprüfen, ob die Datenbank den angeforderten Wert lokalisieren kann, und
wobei der Distributionsdienst (Distributor) dazu eingerichtet ist, im positiven Fall die Anfrage nur an die Proxyeinheit der weiteren Steuerung mit dem verfügbaren Wert weiterzuleiten, und im negativen Fall die Anfrage an viele oder alle die Proxyeinheiten vieler oder aller weiteren Steuerungen weiterzuleiten.

14. Anordnung nach Patentanspruch 12 oder 13,
**dadurch gekennzeichnet,**
**dass** der Distributionsdienst (Distributor) dazu ausgestaltet ist, in dem dritten Schritt den Wert von dem antwortenden Proxydienst zu empfangen, zwischenzuspeichern und an einen oder mehrere anfragende Proxydienste weiterzuleiten.
